# EUROPEAN PATENT SPECIFICATION

(11) **EP 1 237 411 B1**
(45) Date of publication and mention of the grant of the patent: **28.02.2007**
(21) Application number: 99965034.4
(22) Date of filing: 17.12.1999
(51) Int. Cl.: A01N 3/02, A01N 33/26, C07C 1/30, A01N 27/00

(54) **DELIVERY METHODS OF COMPOUNDS FOR INHIBITING THE ETHYLENE RESPONSE IN PLANTS**
ABGABEVERFAHREN VON VERBINDUNGEN ZUR HEMMUNG DER ETHYLEN-ANTWORT VON PFLANZEN
PROCEDES D'APPLICATION DE COMPOSES DESTINES A INHIBER LA REPONSE A L'ETHYLENE DES PLANTES

(43) Date of publication of application: 11.09.2002
(60) Divisional application: 05017652.8
(73) Proprietor: Agrofresh, Inc., Philadelphia PA 19106-2399 (US)
(72) Inventor: DALY, James c/o FLORALIFE, INC., Walterboro, SC 29488 (US); KOURELIS, Bob, Chicago, IL 60647 (US)
(74) Representative: Kent, Venetia Katherine
(86) International application number: PCT/US1999/027941
(87) International publication number: WO 2001/043548

(56) References cited:
- US-A- 5 100 462
- US-A- 5 518 988
- FARLEY FISHER ET AL: "Synthesis of 1-methylpropene" JOURNAL OF ORGANIC CHEMISTRY, AMERICAN CHEMICAL SOCIETY. EASTON, US, vol. 30, no. 6, 1965, pages 2089-2090, XP002185381 ISSN: 0022-3263

## Description

**Field of the Invention:** The present invention generally relates to the regulation of plant physiology, in particular to methods for inhibiting the ethylene response in plants or plant products, in order to prolong their shelf life. The invention relates to prolonging the shelf life of cut flowers and ornamentals, potted plants (edible and non-edible), transplants, and plant foods including fruits, vegetables and root crops.

The present invention relates to methods of minimizing impurities capable of reversibly binding to plant ethylene receptor sites during the synthesis of cyclopropene and its derivatives, in particular methylcyclopropene. Certain impurities produced during the manufacture of cyclopropene and its derivatives, in particular methylcyclopropene, have negative effects on treated plants. Therefore, when plants are treated with cyclopropene and its derivatives, in particular methylcyclopropene, made by using the methods of synthesis of the present invention, the negative effects of these impurities are avoided.

### BACKGROUND OF THE INVENTION

The present invention generally relates to the regulation of plant growth and to methods of inhibiting ethylene responses in plants by application of cyclopropene or its derivatives, in particular methylcyclopropene. The present invention specifically relates to methods of synthesis, followed by application of these gases that inhibit ethylene responses in plants.

Plant growth responses are affected by both internal and external factors. Internal control of plant processes are under the influence of genetic expression of the biological clocks of the plant. These processes influence both the extent and timing of growth processes. Such responses are mediated by signals of various types which are transmitted within and between cells. Intracellular communication in plants typically occurs via hormones (or chemical messengers) as well as other less understood processes.

Because communications in a plant are typically mediated by plant hormones, both the presence and levels of such hormones are important to specific plant cell reactions. The plant hormone that is most relevant to the present invention is ethylene, which has the capacity to affect many important aspects of plant growth, development and senescence. The most important effects of ethylene include processes normally associated with senescence, particularly fruit ripening, flower fading and leaf abscission.

It is well known that ethylene can cause the premature death of plants including flowers, leaves, fruits and vegetables. It can also promote leaf yellowing and stunted growth as well as premature fruit, flower and leaf drop.

Because of these ethylene-induced problems, very active and intense research presently concerns the investigation of ways to prevent or reduce the deleterious effects of ethylene on plants.

One major type of treatment used to mitigate the effects of ethylene employs ethylene synthesis inhibitors. These ethylene synthesis inhibitors reduce the quantity of ethylene that a plant can produce. Specifically, these ethylene synthesis inhibitors inhibit pyridoxal phosphate-mediated reactions and thereby prevent the transformation of S-adenosynlmethione to 1-amino cyclopropane-1-carboxylic acid, the precursor to ethylene. Staby et al. ("Efficacies of Commercial Anti-ethylene Products for Fresh Cut Flowers", Hort Technology, pp. 199-202, 1993) discuss the limitations of these ethylene synthesis inhibitors. Because ethylene synthesis inhibitors only inhibit a treated plant's production of ethylene, they do not suppress the negative effects of ethylene from environmental sources. These environment sources of ethylene exist because ethylene is also produced by other crops, truck exhaust, ethylene gasing units and other sources, all of which can affect a plant during production, shipment, distribution and end use. Because of this, ethylene synthesis inhibitors are less effective than products that thwart a plant's ethylene responses. For a discussion of the ethylene response in plants, see U.S. Patent No. 3,879,188.

The other major type of treatment used to mitigate the effects of ethylene employs blocking the receptor site that signals ethylene action. One of the best known compounds for inhibiting the ethylene response in plants, as well as preventing the deleterious effects from environmental sources of ethylene, is silver thiosulfate ("STS"). An example of a commercial STS product is SILFLOR solution, available from Floralife, Inc., Burr Ridge, Illinois. STS is very effective in inhibiting the ethylene response in plants and has been used because it moves easily in the plant and is not toxic to plants in its effective concentration range. STS can be used by growers, retailers and wholesalers as a liquid that is absorbed into the stems of the flowers. While STS is highly effective, it has a serious waste disposal problem. It is illegal to dispose of the silver component of STS by conventional means, such as by using a laboratory sink, without first pretreating the STS to remove the silver. It is also illegal to spray STS on potted plants. Consequently because of this disposal problem which is typically ignored by growers, STS is now almost exclusively utilized only by growers. Therefore, there is a great desire among postharvest physiologists to find alternatives to STS. To the knowledge of the present inventors, the only commercially acceptable replacements for STS are cyclopropene, cyclopentadiene, diazocyclopentadiene and their derivatives.

Many compounds such as carbon dioxide which block the action of ethylene diffuse from the ethylene receptor or binding site over a period of a few hours. Sisler & Wood, Plant Growth Reg. 7, 181-191, 1988. While these compounds may be used to inhibit the action of ethylene, their effect is reversible and therefore they must be exposed to the plant in a continuous manner if the ethylene inhibition effect is to last for more than a few hours. Therefore, an effective agent for inhibiting the ethylene response in plants should provide an irreversible blocking of the ethylene binding sites and thereby allow treatments to be of short duration.

An example of an irreversible ethylene inhibiting agent is disclosed in U.S. Patent No. 5,100,462. However, the diazocyclopentadiene described in that patent is unstable and has a strong odor. Sisler et al., Plant Growth Reg. 9, 157-164, 1990, showed in a preliminary study that cyclopentadiene was an effective blocking agent for ethylene binding. However, the cyclopentadiene described in that reference is also unstable and has a strong odor.

U.S. Patent No. 5,518,988 discloses the use of cyclopropene and its derivatives, including methylcyclopropene, as effective blocking agents for ethylene binding. Although the compounds in this patent do not suffer from the odor problems of diazocyclopentadiene and cyclopentadiene, because they contain a carbene group, they are relatively unstable due to their potential for undergoing oxidation and other reactions. Therefore, a problem of stability of these gases, as well as the explosive hazards these gases present when compressed, exist.

In "Synthesis of 1-methylpropene", Jouranl of Organic Chemistry, vol. 30, No. 6, 1965, pages 2089-2090 there is disclosed the synthesis of 1-methylcyclopropane by reacting 3-chloro-2-methyl-propene with sodium amide.

WO 00/10386 discloses a method of inhibiting the ethylene response in a plant or plant product comprising the steps of contacting the plant or plant product with a composition comprising cyclopropene derivatives in a composition substantially free of methylenecyclopropane, methylcyclopropanes and butanes.

To solve these problems, a method of incorporating these gaseous compounds, which inhibit the ethylene response in plants, in a molecular encapsulation agent complex in order to stabilize their reactivity and thereby provide a convenient and safe means of storing, transporting and applying or delivering the active compounds to plants has been developed. The application or delivery methods of these active compounds can be accomplished by simply adding water to the molecular encapsulation agent complex.

In trying to implement the teaching of U.S. Patent No. 5,518,988, the problems associated with the stability of the gases and the potential explosive hazard of using compressed gases limit their use and therefore their effectiveness. To solve those problems a molecular encapsulation agent complex that stabilizes the reactivity of these gases and thereby provides a convenient and safe means of storing, transporting and applying or delivering these gases to plants has been developed.

This approach allows for the convenient and safe storage, transport and use of gases that are otherwise difficult to store, ship and dispense and allows for the safe, convenient and consistent use of these gases in the field by the grower, in addition to their use in distribution and in the retail marketplace. In fact, a complex of methylcyclopropene and the molecular encapsulating agent cyclodextrin allows for a product having a shelf life of greater than one year.

Another feature of the molecular encapsulation agents is that once they trap the gaseous active agent in the complex, the complex (and hence the gaseous active agent) does not exhibit a very high vapor pressure and is therefore protected from oxidation and other chemical degradation reactions. A gaseous active compound such as cyclopropene or derivatives thereof is held in a caged molecule whereby the vapor pressure of the solid is very low due to the weak atomic forces (van de Waals and hydrogen binding). The binding of these gaseous active compounds with these molecular encapsulation agents holds the active compound until ready for use.

The present invention relates to the synthesis of cyclopropene derivatives by methods that lower the incidence of impurities, such as hazardous reaction products and by-products, that interfere with the ethylene binding effectiveness of cyclopropene and its derivatives. These reaction product impurities include compounds that bind tightly but reversibly to the ethylene receptor site and inhibit the irreversible binding of cyclopropene and its derivatives, especially methylcyclopropene. The synthesis of these cyclopropene derivative compounds is important because if irreversible binding to the receptor site does not take place during plant treatment, the plant will not be protected against the effects of ethylene.

The prior art syntheses of methylcyclopropene has created problems when the methylcyclopropene was used for inhibiting the ethylene response in plants. While it is well documented in U.S. Patent No. 5,518,988 that methylcyclopropene and other similar compounds are active against ethylene, it has been discovered that not all methods of synthesis are as effective or preferable as the presently claimed synthesis method.

First, it is necessary to avoid producing during synthesis products (or impurities) that reversibly bind to the same ethylene receptor site as the intended active compound. Because these impurities do not irreversibly bind in a manner consistent with the inactivation of the receptor site without phytotoxicity, the effectiveness of using such a reaction product mixture without further processing is reduced. The specific impurities that must be avoided in the synthesis in order to obtain optimal performance of the reaction mixture include methylenecyclopropane, methylcyclopropanes and butanes.

The present inventors have discovered that of all the Lewis bases used for the production of methylcyclopropene, sodium amide and lithium diisopropylamide are most preferred. Synthesis using various metal hydrides and hydroxides were found to produce high levels of other reaction products that lowered the performance of the methylcyclopropene for plant uses. For example, using butynes, 3-hydroxy-2-methylpropenes and other similar starting materials generally yields an impure reaction product that is not appropriate for use in the treatment of plants.

Additional features and advantages of the present invention are described in, and will be apparent from, the detailed description and examples provided.

### SUMMARY OF THE INVENTION

The present invention is as set out in the accompanying claims.

The present invention relates to a method of inhibiting the ethylene response in a plant or plant product comprising the steps of reacting, in an inert environment, a metal amide salt and a halogenated carbene, optionally in the presence of a non-reactive solvent, to form a compound having the following structure 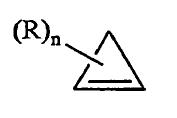 and contracting the plant or plant product with this compound wherein n is 4 and R is selected from the group consisting of hydrogen, saturated or unsaturated C1 to C10 alkyl, hydroxy, halogen, C1 to C10 alkoxy, amino and carboxy, provided that at least one R is C₅ to C₁₀ alkyl or C₅ to C₁₀ alkoxy. This method is generically referred to as the cyclopropene method of minimizing impurities. The preferred metal amide salts for use in this method are sodium amide, lithium amide, potassium amide, lithium diisopropylamide and sodium diisopropylamide.

### DETAILED DESCRIPTION OF THE INVENTION

### The Compounds that Inhibit Plant Ethylene Responses

The compounds that inhibit ethylene responses in plants are disclosed in the following references, all of which are incorporated by reference. U.S. Patent No. 5,100,462 discloses that diazocyclopentadiene and its derivatives are effective blocking agents that inhibit the ethylene response in plants. Sisler et al., Plant Growth Reg. 9, 157-164, 1990, discloses that cyclopentadiene was an effective blocking agent for inhibiting the ethylene response in plants. U.S. Patent No. 5, 518, 988 discloses that cyclopropene and its derivatives, including methylcyclopropene, are effective blocking agents for inhibiting the ethylene response in plants. Rather than repeat the disclosure of those references in this specification, they are incorporated by reference in their entireties.

As previously mentioned, suitable R groups include hydrogen, saturated or unsaturated C1 to C10 alkyl, hydroxy, halogen, C1 to C10 alkoxy, amino and carboxy provided that at least one R is C₅ to C₁₀ alkoxy or C₅ to C₁₀ alkyl.

The term "alkyl" is defined herein to refer to linear or branched, saturated or unsaturated alkyl groups. Examples include but are not limited to methyl, ethyl, propyl, isopropyl and butyl. Alkyl groups of the present invention are most preferably single carbon or linear.

### The Synthesis of the Cyclopropene and Methylcyclopropene Embodiments

Cyclopropene and its derivatives are made by reacting, in an inert environment, a metal amide salt, such as lithium amide salt, sodium amide salt, potassium amide salt, lithium diisopropylamide salt, sodium diisopropylamide salt or other metal amide salts, and a halogenated carbene, such as 3-chloro-3-methyl-2-methylpropene, 3-bromo-3-methyl-2-methylpropene, 3-chloro-2-methylpropene, 3-bromo-2-methylpropene or some other halogenated carbene. The specific compounds named above are preferred. Methylcyclopropene is made under the same conditions with the same metal amide salts discussed above by reacting them with a halogenated methylpropene. The preferred halogenated methyl propenes are 3-chloro-2-methylpropene and 3-bomo-2-methylpropene. These halogenated methyl propenes lead to a high purity product for the intended use and are readily available.

Suitable methods for making cyclopropene and its derivatives, including methylcyclopropene, are covered in the examples below. While a variety of different volatile and non-volatile non-reactive solvents can be utilized, preferred suitable solvents include glycerine, mineral oil, polyethylene glycol, diglyme and tetraglyme. The use of a non-reactive solvent is optional. The inert environment can be created by any known method including purging the reaction vessel with nitrogen or any other inert gas.

The concentration ratio of the metal amide salt to the halogenated carbene or halogenated methyl propene is a molar ratio of about 1:1 to about 4:1. The reaction temperature can range from about 20° to about 60°C and the reaction pressure can range from about 1 to about 100 psi.

The resulting exothermic solution from this reaction is allowed to react until no further heat is given off. After the reaction is complete, a polar solvent is added to the reaction solution. While a variety of polar solvents can be used, suitable examples of such polar solvents include water, acetone and alcohol. After the polar solvent has been added, the head space of the reaction solution is displaced, cooled and placed into a second vessel containing a molecular encapsulation agent, such as cyclodextrin, and buffered water to form the desired molecular encapsulation agent complex.

When the gas is released into the original vessel using sodium amide, a non-polar solvent is used to release the gas when a lithium salt is employed as the metal amide salt.

Although it is not necessary to achieve the objectives of this invention, fractional distillation can be used on the final product.

In one preferred embodiment, the headspace of the reaction solution is cooled through a condenser and cold trap. The water used with the molecular encapsulation agent is buffered to approximately a pH of 4 to 6, and the reaction product and molecular encapsulation agent is stirred for 1 to 24 hours at temperatures ranging from room temperature to 40°C. After the complex is formed, the excess water is filtered off and the resulting slurry dried to form a powder. The examples below describe a method of preparing a molecular encapsulation agent from methylcyclopropene and alpha- cyclodextrin.

### The Plants Applicable to the Present Invention

The term "plant" is used generically in the present invention to also include woody-stemmed plants in addition to field crops, potted plants, cut flowers, harvested fruits and vegetables and ornamentals. Some of the plants that can be treated by the methods of the present invention are listed below.

Plants treated by the compounds that inhibit the ethylene response need to be treated at levels that are below phytotoxic levels. This phytotoxic level varies not only by plant but also by cultivar.

When correctly used, the compounds prevent numerous ethylene effects, many of which have been disclosed in U.S. Patent Nos. 5,518,988 and 3, 879,188, both of which are incorporated herein by reference in their entirety. The present invention can be employed to combat numerous plant ethylene responses. Ethylene responses may be initiated by either exogenous or endogenous sources of ethylene. Ethylene responses include, for example, (i) the ripening and/or senescence of flowers, fruits and vegetables, (ii) the abscission of foliage, flowers and fruit, (iii) the prolongation of the life of ornamentals, such as potted plants, cut flowers, shrubbery and dormant seedlings, (iv) the inhibition of growth in some plants such as the pea plant, and (v) the stimulation of plant growth in some plants such as the rice plant.

Vegetables which may be treated by the methods of the present invention to inhibit senescence include leafy green vegetables such as lettuce (e.g., Lactuea sativa), spinach (*Spinaca oleracea*) and cabbage (*Brassica* oleracea; various roots such as potatoes (*Solanum tuberosum*), carrots (*Daucus*); bulbs such as onions (*Allium* sp.) ; herbs such as basil (*Ocimum basilicum*), oregano (*Origanum vulgare*) and dill (*Anethum graveolens*) ; as well as soybean (*Glycine max*), lima beans (*Phaseolus limensis*), peas (*Lathyrus* sp.), corn (*Zea mays*), broccoli (*Brassica oleracea italica*), cauliflower (*Brassica oleracea botrytis*) and asparagus (*Asparagus officinalis*).

Fruits which may be treated by the methods of the present invention to inhibit ripening include tomatoes (*Lycopersicon esculentum*), apples (*Malus domes tica*), bananas (*Musa sapientum*), pears (*Pyrus communis*), papaya (*Carica papya*), mangoes (*Mangifera indica*), peaches (*Prunus persica*), apricots (*Prunus armeniaca*), nectarines (*Prunus persica nectarina*), oranges (*Citrus* sp.), lemons (*Citrus limonia*), limes (*Citrus aurantifolia*), grapefruit (*Citrus paradisi*), tangerines (*Citrus nobilis deliciosa*), kiwi (*Actinidia*. *chinenus*)*,* melons such as cantaloupes (*C. cantalupensis*) and musk melons (*C. melo*), pineapples (*Aranae comosus*), persimmon (*Diospyros* sp.) and raspberries (e.g., *Fragaria or Rubus ursinus*), blueberries (*Vaccinium* sp.), green beans (*Phaseolus vulgaris*), members of the genus Cucumis such as cucumber (*C. sativus*) and avocados (*Persea americana*).

Ornamental plants which may be treated by the methods of the present invention to inhibit senescence and/or to prolong flower life and appearance (such as the delay of wilting), include potted ornamentals and cut flowers. Potted ornamentals and cut flowers which may be treated with the methods of the present invention include azalea (*Rhododendron* spp.), hydrangea (*Macrophylla hydrangea*), hibiscus (*Hibiscus rosasanensis*), snapdragons (*Antirrhinum* sp.), poinsettia (*Euphorbia pulcherima*), cactus (e.g., *Cactaceae schlumbergera truncata*), begonias (*Begonia* sp.), roses (*Rosa* sp.), tulips (*Tulipa* sp.), daffodils (*Narcissus* sp.), petunias (*Petunia hybrida*), carnation (*Dianthus caryophyllus*), lily (e.g., *Lilium* sp.), gladiolus (*Gladiolus* sp.), Alstroemeria (*Alstroemaria brasiliensis*), anemone (e.g., *Anemone bland*), columbine (*Aquilegia* sp.), aralia (e.g., *Aralia chinesis*), aster (e.g., *Aster carolinianus*), bougainvillea (*Bougainvillea* sp.), camellia (*Camellia* sp.), bellflower (*Campanula* sp.), cockscomb (*Celosia* sp.), falsecypress (*Chamaecyparis* sp.), chrysanthemum (*Chrysanthemum* sp.), clematis (*Clematis* sp.), cyclamen (*Cyclamen* sp.), freesia. (e.g., *Freesia refracta*), and orchids of the family *Orchidaceae.*

Plants which may be treated by the methods of the present invention to inhibit abscission of foliage, flowers and fruit include cotton (*Gossypium* spp.), apples, pears, cherries (*Prunus avium*), pecans (*Carva illinoensis*), grapes (*Vitis vinifera*), olives (e.g., *Olea europaea*), coffee (*Cofffea arabica*), snapbeans (*Phaseolus vulgaris*), and weeping fig (*Ficus benjamina*), as well as dormant seedlings such as various fruit trees including apple, ornamental plants, shrubbery, and tree seedlings.

In addition, shrubbery which may be treated according to the present invention to inhibit abscission of foliage include privet (*Ligustrum* sp.), photinea (*Photina* sp.), holly (*Ilex* sp.), ferns of the family Polypodiaceae, schefflera (*Schefflera* sp.), aglaonema (*Aglaonema* sp.), cotoneaster (Cotoneaster sp.), barberry (*Berberris* sp.), waxmyrtle (*Myrica* sp.), abelia (*Abelia* sp.), acacia (*Acacia* sp.), and bromeliades of the family *Bromeliaceae.*

### EXAMPLES

While many of the examples described below are related to the synthesis molecular encapsulation agent compexing and delivery or application of methylcyclopropene to plants, the same synthesis methods have also been found effective for cyclopropene and other cyclopropene derivatives and the same molecular encapsulation agent compexing and delivery or application methods have also been found effective for cyclopropene, cyclopentadiene, diazocyclopentadiene and their derivatives. Methylcyclopropene was used in the examples because it is one of the most active derivatives of cyclopropene that binds to the ethylene receptor site of plants.

### Example 1: Synthesis of Methylcyclopropene

At room temperature, nitrogen gas (99.95% pure) is pumped into a nitrogen vessel (35 1/2" X 28" X 32") containing either sodium amide powder (90%-NaNH₂) or lithium diisopropylamide powder (97%- [(CH₃)₂CH]₂NLi). A separate powder addition vessel is also purged with the same nitrogen gas. Purging with nitrogen is necessary because of the reactivity of the above-mentioned Lewis bases with air, and to eliminate any contamination before conducting the synthesis reaction. In the powder addition vessel containing the inert atmosphere, the sodium amide (or an equivalent molar concentration of lithium diisopropylamide) is added in an amount ranging from 365-1100 grams, with the larger amount being preferred. To weigh the proper amount of the Lewis base, all weighing is performed in a nitrogen box with nitrogen purging to eliminate oxygen and the threat of spontaneous ignition of the base. Special care is important when working with such bases for proper safety.

Once the Lewis base in powder form is completely added, the openings in the powder addition vessel that were used for purging are sealed off to exclude air. The powder addition vessel is attached to the main system. The reaction vessel, which already has been purged with nitrogen and has been partially evacuated, is opened to the powder addition vessel to allow the powder to fall into the reaction vessel with the aid of nitrogen flow. Nitrogen enters the powder addition vessel during transfer of the Lewis base.

After the powder is transferred into the reaction vessel, the ball valve is closed. After the powder is added, a light mineral oil (dried with molecular sieves) or another equivalent solvent is added by opening the connecting ball valve and allowing it to pour into the reaction vessel with the aid of nitrogen flow. The amount of oil added during the reaction can vary from 1-47 liters, with the higher amount 47 liters being preferred. The reaction vessel is then purged and closed. The reaction vessel temperature is adjusted to a temperature anywhere from 0°C to 75°C, and preferably about 20°C to start the reaction. The temperature can be raised or lowered by heating or chilling the jacket using a circulating pump. Should the holding capacity of the vessel be exceeded, the procedure is repeated.

During the addition of ingredients, the contents of the reaction vessel are stirred with a propeller mixer, but splashing of the contents should be avoided. After mixing for 1-60 minutes, and preferably for about 20 minutes, 3-chloro-2-methylpropene is added to the reaction vessel in an amount ranging from 0.15-1.0 liters. During the addition of the 3-chloro-2-methylpropene, there is continuous purging with nitrogen gas. The liquid reactant 3-chloro-2-methylpropene is added slowly over a period of 20 minutes. During this addition, the temperature of the reaction vessel is monitored and kept at less than 40°C. Once the 3-chloro-2-methylpropene is completely added, the vessel should be agitated for an additional 1-30 minutes, and preferably for 15 minutes, using the propeller mixer discussed above. A reaction vessel pressure of about two atmospheres is used in this example.

After all the 3-chloro-2-methylpropene has been reacted, the desired end-product, methylcyclopropene, exists as a sodium salt. To react the remainder of the Lewis base and facilitate liberation of the methylcyclopropene product, the nitrogen purge is stopped and water is added ranging from 0.00-1.47 liters by adding the water under positive pressure over a period of 1 hour. Once all the water has been added, a ball valve connecting the vessel with the condenser is opened. Any pressure is then released by bubbling the gaseous methylcyclopropene product through a mixture of cyclodextrin dissolved in water (as explained later in this example).

Once the reactive ingredients have been mixed, the headspace gas in the reaction vessel is transferred to a 5 gallon mixing vessel, already lined with a bag filter (5-25 micron mesh plastic) and containing 0.9-2.8 kg of alpha-cyclodextrin, 0.575 liters of a buffer solution. The alpha-cyclodextrin is weighed out on an electronic scale and transferred to the mixing vessel by pouring it through the opening of the mixing vessel. The buffer solution is prepared by combining a 0.2 M sodium acetate solution with a 0.2 M acetic acid solution which gives a pH in the range of 3 to 5. The headspace gas in the reaction vessel is transferred by pulling a vacuum on the mixing vessel to 15 psi, closing the condenser/reaction vessel ball valve and opening the ball valve linking the condenser (15 coils, 3/8') to the mixing vessel, allowing the gas in the condenser, which has been chilled at a temperature of 0-10°C by a chilling circulating pump, to pass through to the mixing vessel. The reason for chilling the gas in the condenser is to significantly reduce any 3-chloro-2-methylpropene from entering the mixing vessel. The lower boiling point of methylcyclopropene (which is approximately 12°C) compared to the higher boiling point of the 3-chloro-2-methylpropene (which is 70°C) prevents the later from entering the mixing vessel. The condenser is also positioned in such a way that the 3-chloro-2-methylpropene will return to the reaction flask.

Once the gas passes from the condenser, the condenser/mixing vessel ball valve is closed, and the condenser/reaction vessel ball valve is opened allowing the headspace gas from the reaction vessel to flow into the condenser. The condenser/reaction vessel ball valve is then closed, the condenser/mixing vessel ball valve is reopened, and the gas flows to the mixing vessel. Once the initial head space is transferred over to the mixing vessel, a vacuum will begin to be created in the reaction vessel which can be detected by reading the mounted pressure gauge. When this occurs, the reaction vessel is filled with nitrogen gas (99.95% pure) by closing any connections to the rest of the system, and allowing the nitrogen gas to enter through the nitrogen inlet valve when a slight vacuum occurs. Once the reaction vessel has been filled with.nitrogen gas, which will be identifiable by reading the mounted pressure gauge, the head space gas from the reaction vessel is once again transferred to the mixing vessel. The process is repeated until the mixing vessel is filled with gas as indicated by the pressure gauge. A minimum concentration of 80,000 ppm of methylcyclopropene is preferred in the mixing vessel at this step. This concentration can be calculated the same way as previously mentioned. After the mixing vessel is filled, all the connections are closed, and the vessel is removed from the system and placed on a shaker, which is allowed to shake so that the mixture is completely agitated for 1-5 hours at less than 70°C. The methylcyclopropene is trapped in the alpha-cyclodextrin during this unit operation. After the contents are agitated, the mixing vessel is allowed to equilibrate for 0-72 hours, and preferably for at least 24 hours at a temperature of 0-30°C (preferably about 4°C) . Next, the contents in the mixing vessel, if containing the buffer solution, are filtered out by vacuum filtration, by connecting a vacuum pump at the bottom outlet of the mixing vessel, which will remove the buffer solution from the mixture while the powder remains in the confines of the filtering bag.

Once all the buffer solution has been removed, the wet powder containing the entrapped methylcyclopropene is transferred onto a plastic tray and allowed to air dry for 24-48 hr. Once it has been dried, the filtered material is ground in a powder grinder, creating a fine powder (approximately 100 mm mesh). If the material in the mixing vessel did not contain the buffer solution, no filtering or grinding is needed. After the powder is ground, it is placed in a powder mill and allowed to mix for 5-10 minutes at approximately 100 rpm. Once the powder is mixed, it is analyzed and mixed with dextrose or dextrin to the desired concentration of methylcyclopropene entrapment. If the amount of entrapped methylcyclopropene is lower than the desired concentration, it is bulked and milled with other samples. In both cases, after the newly formed powders are mixed, they are analyzed again to insure that they meet specifications. Per every reaction vessel made, 2-7 mixing vessels can be filled, depending on the amount of methylcyclopropene remaining in the reaction vessel after the head space has been transferred. However, depending on the amount of methylcyclopropene gas remaining in the reaction vessel, a waiting period of 0-3 hours may be necessary for the reaction vessel to produce more methylcyclopropene gas. Once the mixing vessels are filled, and there is not enough methylcyclopropene gas to fill more vessels, the reaction vessel is removed from the system, but kept inside a hood.

Cleaning: Water is slowly added to the reaction vessel to begin the cleaning process. Water is added slowly due to its reactivity with excess sodium amide. When the sodium amide is mixed with water, ammonia and sodium salts are formed. Once the reaction vessel has been washed completely, it is allowed to air dry completely before it is reused. The three addition vessels are cleaned once a week with water. They are thoroughly rinsed with water until no reactants are found. All the piping/tubing and condenser are also cleaned thoroughly once a week with water. The mixing vessels and inner filter linings are thoroughly washed with water after every use. All waste water is disposed of according to governmental regulations. Cleanliness, in addition to purging of the vessels with nitrogen gas and the cooling of gas in the condenser are safety steps that also prevent any contamination of the methylcyclopropene.

### Example 2: Manufacture of methylcyclopropene using 3-bromo-2-methylpropene and lithium diisopropylamide

Under a nitrogen atmosphere, approximately 0.1 to 0.5 moles of lithium dilsopropylamide are placed into a two liter container. 100 ml of a non-volatile organic solvent, such as dried mineral oil, is then added to the container. Approximately 0.1 to 0.5 moles of 3-bromo-2-methyl propene is then added to the container. A 1:1 molar ratio of the lithium amide and the halogenated methyl propene is utilized. The exothermic solution is then allowed to react until no heat was given off. Then, approximately 0.1 to 0.5 moles of a polar solvent, such as water, is added to the container.

The head space of the reaction is displaced with a syringe or by sweeping with nitrogen through a condenser and cold trap, connected to a vacuum system into a flask containing approximately 50 to 200 grams of alpha-cyclodextrin and 50 to 200 ml of water buffered at a pH of approximately 4 to 6. The cold trap is kept at a temperature of approximately 0-10°C, whereas the condenser is at a temperature ranging from approximately 10-20°C. This solution is then stirred for about 1 to 24 hours at a temperature ranging from room temperature to 45°C. Lastly, after the solution has reacted, the excess water is filtered out. Then the slurry is dried to a powder form. In this manner, a complex is formed in accordance with the present invention.

Plants are preferably exposed to a non-phytotoxic amount of the active compound. To expose the plant to the gaseous cyclopropene or derivative thereof, the aqueous solution is preferably positioned near the plant. Alternatively, the powder may be placed in an aerosol can containing sufficient water and 40-50 psi of compressed gas. Then, the gaseous cyclopropene may be sprayed onto the plant.

## Claims

1. A method of inhibiting the ethylene response in a plant or plant product comprising the steps of contacting the plant or plant product with a composition comprising a compound prepared by reacting, in an inert environment, a metal amide salt and a halogenated carbene, optionally in the presence of a non-reactive solvent, the compound having the following structure 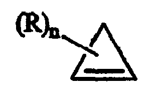 wherein
n is 4, and
R is selected from the group consisting of hydrogen, saturated or unsaturated C₁ to C₁₀ alkyl, hydroxy, halogen, C₁ to C₁₀ alkoxy, amino and carboxy, subject to the proviso that at least one R is C₅ to C₁₀ alkyl or C₅ to C₁₀ alkoxy, and
wherein the composition is substantially free of methylenecyclopropane, methylcyclopropanes and butanes.

2. The method of claim 1 wherein the metal amide salt is selected from the group consisting of sodium amide, lithium amide, potassium amide, lithium diisopropylamide and sodium diisopropylamide.

## Patentansprüche

1. Verfahren zur Hemmung der Ethylen-Antwort in einer Pflanze oder einem Pflanzenprodukt, umfassend die Schritte des Inkontaktbringens der Pflanze oder des Pflanzenprodukts mit einer Zusammensetzung, umfassend eine Verbindung, welche durch Umsetzen eines Metallamid-Salzes und eines halogenierten Carbens, gegebenenfalls in Gegenwart eines nicht-reaktiven Lösungsmittels, in einer inerten Umgebung hergestellt wird, wobei die Verbindung folgende Struktur aufweist: 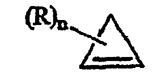 wobei n 4 ist, und
R aus der Gruppe, bestehend aus Wasserstoff, gesättigtem oder ungesättigtem C₁ bis C₁₀ Alkyl, Hydroxy, Halogen, C₁ bis C₁₀ Alkoxy, Amino und Carboxy, ausgewählt ist, unter der Maßgabe, dass mindestens ein R C₅ bis C₁₀ Alkyl oder C₅ bis C₁₀ Alkoxy ist, und wobei die Zusammensetzung im Wesentlichen frei von Methylencyclopropan, Methylcyclopropanen und Butanen ist.

2. Verfahren nach Anspruch 1, wobei das Metallamid-Salz aus der Gruppe, bestehend aus Natriumamid, Lithiumamid, Kaliumamid, Lithiumdiisopropylamid und Natriumdiisopropylamid, ausgewählt ist.

## Revendications

1. Méthode d'inhibition de la réponse d'une plante ou d'un produit de plante à l'éthylène comprenant les étapes de la mise en contact de la plante ou d'un produit de plante avec une composition comprenant un composé préparé par la réaction, dans un environnement inerte, d'un sel d'amide de métal et d'un carbène halogéné, optionnellement en présence d'un solvant non réactif, le composé ayant la structure suivante 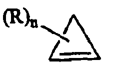 où n est égal à 4, et
R est choisi dans le groupe constitué par hydrogène, alkyle en C₁ à C₁₀ saturé ou insaturé, hydroxy, halogène, alcoxy en C₁ à C₁₀, amino et carboxy, sous réserve qu'au moins un R soit un alkyle en C₅ à C₁₀ ou un alcoxy en C₅ à C₁₀, et où la composition est substantiellement exempte de méthylènecyclopropane, méthycyclopropanes et butanes.

2. Méthode selon la revendication 1, dans laquelle le sel d'amide de métal est choisi dans le groupe constitué par l'amidure de sodium, l'amidure de lithium, l'amidure de potassium, le diisopropylamidure de lithium et le diisopropylamidure de sodium.
